# EUROPÄISCHE PATENTSCHRIFT

(11) **EP 3 531 012 B1**
(45) Veröffentlichungstag und Bekanntmachung des Hinweises auf die Patenterteilung: **10.08.2022**
(21) Anmeldenummer: 19155057.3
(22) Anmeldetag: 01.02.2019
(51) Int. Cl.: F21S 43/14, F21S 43/237, F21S 43/245, F21S 43/247, F21S 43/31, F21V 8/00

(54) **BELEUCHTUNGSEINRICHTUNG FÜR KRAFTFAHRZEUGE MIT EINEM LANGGESTRECKTEN LICHTLEITER**
LIGHTING DEVICE FOR MOTOR VEHICLES WITH A ROD-LIKE LIGHT GUIDE
DISPOSITIF D'ÉCLAIRAGE POUR VÉHICULES AUTOMOBILES POURVU DE GUIDE DE LUMIÈRE ALLONGÉ

(30) Priorität: 22.02.2018 DE 102018104055
(43) Veröffentlichungstag der Anmeldung: 28.08.2019
(73) Patentinhaber: Automotive Lighting Reutlingen GmbH, 72762 Reutlingen (DE)
(72) Erfinder: Rülke, Daniel, 72622 Nürtingen (DE)
(74) Vertreter: DREISS Patentanwälte PartG mbB

(56) Entgegenhaltungen:
- EP-A1- 1 992 868
- EP-A1- 3 208 525
- WO-A1-2006/101011
- DE-A1- 10 022 779

## Beschreibung

Die vorliegende Erfindung betrifft eine Kraftfahrzeugbeleuchtungseinrichtung nach dem Oberbegriff des Anspruchs 1, wie aus EP 3 208 525 A1 bekannt.

Eine solche Beleuchtungseinrichtung ist per se bekannt und weist einen von einer Grenzfläche ummantelten, eine langgestreckte Form aufweisenden Lichtleiter und eine Licht in den Lichtleiter einspeisende Lichtquelle auf. Der Lichtleiter ist dazu eingerichtet, das eingespeiste Licht durch an seiner Grenzfläche erfolgende interne Totalreflexionen in seinem Inneren weiterzuleiten, wobei sich eine der langgestreckten Form folgende mittlere Lichtausbreitungsrichtung ergibt. Die Grenzfläche weist einen konvexen Lichtaustrittsflächenbereich und einen Rückseitenbereich auf, der als eine Prismenrippe angeordnete Umlenkelemente mit Reflexionsflächen aufweist. Die Reflexionsflächen sind durch ihre Form und Anordnung dazu eingerichtet, auf sie einfallendes Licht der Lichtquelle so steil zum Lichtaustrittsflächenbereich umzulenken, dass es dort aus dem Lichtleiter austritt. Der Lichtaustrittsflächenbereich bildet mit seiner konvexen Form eine Oberfläche einer Sammellinse.

Mit dem Lichtleiter als optischem Bauteil werden insbesondere regelkonforme Signallichtverteilungen wie Blinklichtverteilungen oder Tagfahrlichtverteilungen erzeugt. Mit Lichtleitern kann ein sehr homogenes, d.h. gleichmäßig hell leuchtendes Erscheinungsbild der leuchtenden Fläche erreicht werden. In der Regel weist der Rückseitenbereich eine Prismenrippe auf, an der Licht im Wesentlichen durch interne Totalreflexion auf einen Lichtaustrittsflächenbereich gelenkt wird, an der das reflektierte Licht austritt. Die Prismenrippe besteht aus den eingangs genannten Umlenkelementen, welche die Reflexionsflächen aufweisen.

Aus der EP 1 992 868 A1 und der WO 2006/101011 A1 sind weitgehend ebene Lichtleiterplatten bekannt, deren Länge und Breite jeweils eine Mehrfaches der Materialstärke der Platten beträgt.

Bei starken Krümmungen in der langgestreckten Form des Lichtleiters kann es zu Inhomogenitäten der Leuchtdichte auf dem Lichtaustrittsflächenbereich des Lichtleiters kommen. Als Folge erscheint der Lichtaustrittsflächenbereich dann nicht mehr gleichmäßig hell leuchtend. Eine bekannte Gegenmaßnahme besteht in einer Verringerung der Krümmung. Andererseits kann die Krümmung in der Regel nicht beliebig verringert werden, da die langgestreckte Form des Lichtleiters durch Beschränkungen des zur Verfügung stehenden Bauraums beschränkt ist oder sich Design-Vorgaben fügen muss.

Vor diesem Hintergrund besteht die Aufgabe der Erfindung darin, die Ausleuchtung des Lichtaustrittsflächenbereichs des Lichtleiters zu verbessern und dadurch die räumliche Leuchtdichteverteilung zu homogenisieren, ohne dafür den räumlichen Verlauf des Lichtleiters verändern zu müssen.

Diese Aufgabe wird mit einer Beleuchtungseinrichtung mit den kennzeichnenden Merkmalen des Anspruchs 1 gelöst.

Mit diesen Merkmalen wird eine verbesserte Ausleuchtung des Lichtaustrittsflächenbereichs des Lichtleiters erzeugt. Die verbesserte Ausleuchtung wird dadurch erzielt, dass die Begrenzungsflächen der Längsrillen auf sie auftreffendes Licht auch in Richtung der Breite des langgestreckten Lichtleiters streuen, wodurch vor dem Auftreffen auf diese Begrenzungsflächen bestehende Inhomogenitäten in der Leuchtdichte des auf diese Begrenzungsflächen auftreffenden Lichtes verwaschen werden.

Als erwünschte Folge ergibt sich eine gleichmäßigere Leuchtdichteverteilung in dem Lichtaustrittsflächenbereich eines stabförmig-langgestreckten Lichtleiters. In Ausführungsbeispielen der Erfindung werden zur Auskopplung dienende Prismen auf der Rückseite des Lichtleiters mit Längsrillen versehen, d.h. die Auskoppelprismen werden mit einer weiteren Prismenstruktur überlagert wobei die Kanten der Prismen senkrecht zu den Prismenkanten der ursprünglichen Auskoppelprismen verlaufen.

Eine bevorzugte Ausgestaltung zeichnet sich dadurch aus, dass eine Einhüllende einer Reflexionsfläche von jeweils einem Umlenkelement eine ebene Fläche ist. Diese Ausgestaltung zeichnet sich durch eine einfache Realisierbarkeit aus.

Bevorzugt ist auch, dass die Reflexionsflächen der Umlenkelemente eine Flächennormale besitzen, die eine zum Lichtaustrittsflächenbereich weisende Komponente und eine entgegengesetzt zur mittleren Lichtausbreitungsrichtung weisende Komponente aufweist. Durch diese Merkmale bewirken die Reflexionsflächen die erwünschte Umlenkung von auf sie einfallendem Licht zum Lichtaustrittsflächenbereich, die dieses Licht dort austreten lässt.

Weiter ist bevorzugt, dass die Längsrillen durch ebene Flächen begrenzt werden. Diese ebenen Flächen bewirken eine gleichmäßige Streuung der auf diese Flächen einfallenden Lichtstrahlen der Lichtquelle in quer zur mittleren Lichtausbreitungsrichtung liegenden Richtungen.

Eine weitere bevorzugte Ausgestaltung zeichnet sich dadurch aus, dass die Längsrillen durch gekrümmte Flächen begrenzt werden. Gekrümmte Flächen haben den Vorteil, dass bereits eine einzelne Fläche aus gleicher Richtung auf verschiedene Punkte der Fläche einfallende Lichtstrahlen in verschiedene Richtungen reflektiert, was eine gute Durchmischung der Richtungen der reflektierten Strahlen in quer zur mittleren Lichtausbreitungsrichtung liegenden Richtungen begünstigt. Bevorzugt ist auch, dass die Längsrillen durch Zylinderflächen begrenzt werden. Dabei bildet ein Rand eines quer zur Längsrichtung der Längsrillen liegenden Querschnitts eine Leitkurve, und eine die Leitkurve entlang geführte Gerade definiert die Fläche der Längsrille. Durch die Gestaltung der Leitkurve lassen sich beim Entwurf des Lichtleiters viele verschiedene Längsrillenformen vorgeben, mit denen die Richtungen der Streuung in quer zur mittleren Lichtausbreitungsrichtung liegenden Richtungen definiert eingestellt werden kann.

Weiter ist bevorzugt, dass die Längsrillen in einer quer zur Längsrichtung der Längsrillen liegenden Richtung eine Breite B von 1/10 mm bis 3/10 mm besitzen sind. Eine weitere bevorzugte Ausgestaltung zeichnet sich dadurch aus, dass die Längsrillen eine Tiefe T von 1/10 mm bis maximal 3/10 besitzen. Es hat sich gezeigt, dass diese Abmessungen einerseits bereits ausreichen, um eine gewünschte Streuwirkung in quer zur mittleren Lichtausbreitungsrichtung liegenden Richtungen zu erzielen, und andererseits aber noch klein genug sind, um vom Betrachter nicht als gesonderte Struktur im Erscheinungsbild des Lichtleiters wahrgenommen zu werden.

Erfindungsgemäß ist der Rückseitenbereich des Lichtleiters in einem quer zur mittleren Lichtausbreitungsrichtung liegenden Querschnitt schmaler als der Lichtaustrittsflächenbereich. Durch diese Ausgestaltung ergibt sich eine erwünschte Bündelung, d.h. eine Verringerung des Öffnungswinkels des im Lichtleiter in Richtung zum Lichtaustrittsflächenbereich propagierenden Lichtes.

Bevorzugt ist auch, dass der Rückseitenbereich in der Richtung, die zur mittleren Lichtausbreitungsrichtung und zu einer vom Rückseitenbereich zum

Lichtaustrittsflächenbereich weisenden Richtung quer liegt, eine Breite von 0,5 mm bis 2 mm auf.

Auch für diese Abmessungen gilt, dass sie einerseits ausreichend groß sind, um die lichttechnischen Anforderungen zu erfüllen, und andererseits noch klein genug sind, um sich im Erscheinungsbild des Lichtleiters nicht störend bemerkbar zu machen.

Weitere Vorteile ergeben sich aus der Beschreibung und den beigefügten Zeichnungen. Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Bei der Beschreibung einzelner Figuren wird ggf. auch auf Elemente aus anderen Figuren Bezug genommen. Es zeigen in schematischer Form:
- Figur 1: das technische Umfeld der Erfindung in Form einer Beleuchtungseinrichtung für Kraftfahrzeuge;
- Figur 2: einen Abschnitt eines langgestreckten Lichtleiters;
- Figur 3a: ein Umlenkelement eines langgestreckten Lichtleiters mit einer Längsrillen aufweisenden Reflexionsfläche;
- Figur 3b: eine Reflexionsfläche eines Umlenkelements von der Seite;
- Figur 3c: eine Ausgestaltung, bei der die Längsrillen durch gekrümmte Flächen begrenzt werden;
- Figur 4: Lichtverteilungen vor und nach der Reflexion an einer ebenen Reflexionsfläche eines Umlenkelements, das keine Längsrillen aufweist und daher nicht Teil der Erfindung ist;
- Figur 5: Lichtverteilungen, wie sie mit einem Längsrillen in Umlenkelementen aufweisenden Lichtleiter erzeugt werden;
- Figur 6: weitere Lichtverteilungen vor und nach der Reflexion an einer ebenen Reflexionsfläche eines Umlenkelements, das keine Längsrillen aufweist und daher nicht Teil der Erfindung ist;

- Figur 7: weitere Lichtverteilungen wie sie mit einem Längsrillen in Umlenkelementen aufweisenden Lichtleiter erzeugt werden;

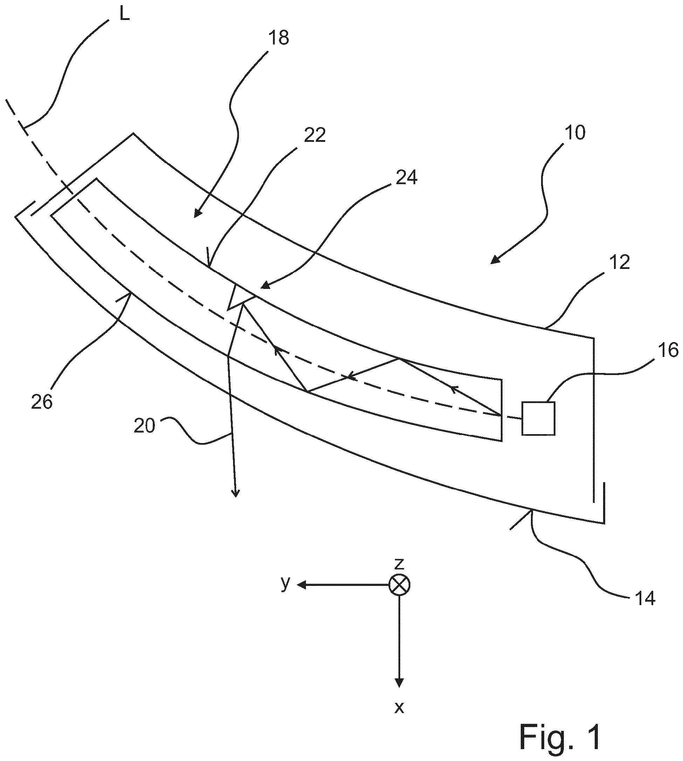

Im Einzelnen zeigt die Figur 1 eine Beleuchtungsvorrichtung 10 für ein Kraftfahrzeug. Die Beleuchtungseinrichtung weist ein Gehäuse 12 und eine transparente Abdeckscheibe 14 auf, die eine Lichtaustrittsöffnung des Gehäuses 12 abdeckt. Im Inneren des Gehäuses 12 befindet sich eine Kraftfahrzeugleuchte, die Licht in einer regelkonformen Signallichtverteilung für Kraftfahrzeugleuchten abstrahlt. Eine Hauptabstrahlrichtung der Kraftfahrzeugleuchte liegt in der Regel parallel zu einer Längsachse des Kraftfahrzeuges, in dem die Beleuchtungseinrichtung und die Kraftfahrzeugleuchte bestimmungsgemäß verwendet werden.

Eine regelkonforme Signallichtverteilung zeichnet sich zum Beispiel dadurch aus, dass in einer vorgegebenen Entfernung vor der Kraftfahrzeugleuchte vorgeschriebene Mindesthelligkeitswerte in horizontaler Richtung H und in vertikaler Richtung V erreicht werden, wobei die Richtungen jeweils als Winkelabweichung von der Hauptabstrahlrichtung definiert sind.

Im dargestellten Beispiel ist die Hauptabstrahlrichtung eine x-Richtung eines rechtwinkligen und rechtshändigen Koordinatensystems, dessen z-Richtung bei der bestimmungsgemäßen Verwendung der Beleuchtungseinrichtung 10 parallel zu einer Kraftfahrzeughochachse liegt und deren y-Richtung bei dieser Verwendung parallel zur einer Querachse des Kraftfahrzeugs liegt.

Die Beleuchtungseinrichtung 10 weist eine Lichtquelle 16 in Form einer Leuchtdiode oder einer Anordnung aus mehreren Leuchtdioden und einen Lichtleiter 18 auf, der mit Licht 20 der Lichtquelle 16 gespeist wird. Der Lichtleiter weist eine langgestreckte Form auf und erstreckt sich insbesondere längs einer im Raum gekrümmten Kurve L. Bei dem dargestellten Lichtleiter 18 handelt es sich somit um einen langgestreckten und Stablichtleiter, der dem Verlauf L entsprechend gebogen, aber auch gerade verlaufen kann.

Die Kurve L entspricht damit auch der Hauptlichtausbreitungsrichtung von Licht der Lichtquelle 16 im Lichtleiter 18. Unter einer langgestreckten Form wird eine Form verstanden, bei der eine Länge wenigstens um einen Faktor 5 größer ist als eine Breite und eine Höhe.

In dem dargestellten Ausführungsbeispiel ist die Lichtquelle 16 an einer Stirnseite des Lichtleiters 18 so angeordnet, dass von ihr ausgehendes Licht 20 über eine quer zur Länge L angeordnete erste Stirnseite in den Lichtleiter 18 eintritt. Ein Teil des Lichtes 20 erfährt an der den Lichtleiter ummantelnden Grenzfläche des Lichtleiters interne Totalreflexionen und wird dadurch im Inneren des Lichtleiters mit um die Kurve L herum streuenden Ausbreitungsrichtungen weitergeleitet.

Der Lichtleiter 18 weist einen Rückseitenbereich 22 auf, in dem prismenförmige Umlenkelemente 24 angeordnet sind. Aus Gründen der Übersichtlichkeit ist in der Figur 1 nur ein einziges Umlenkelement 24 angeordnet. In der Regel werden aber mehrere in einer Reihe angeordnete und damit zum Beispiel eine Prismenrippe bildende Umlenkelemente in dem Rückseitenbereich 22 angeordnet sein.

Ein Teil des Lichtes 20 erfährt eine interne Totalreflexion an einer Reflexionsfläche des Umlenkelements 24. Die Reflexionsfläche ist gegenüber der Längsrichtung L so geneigt, dass sich in eine Hauptabstrahlrichtung x weisende Richtungskomponenten des auftreffenden Lichtes bei der Reflexion vergrößern. Als erwünschte Folge trifft so umgelenktes Licht so steil auf einen Lichtaustrittsflächenbereich 26 des Lichtleiters 18 auf, dass es dort austritt.

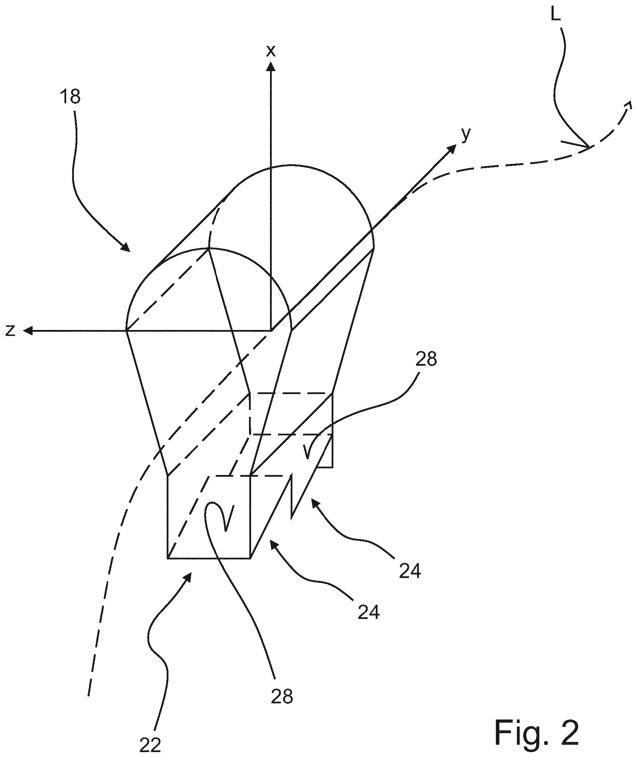

Figur 2 zeigt einen Abschnitt eines langgestreckten Lichtleiters mit einer bevorzugten Querschnittsform, die senkrecht zum Verlauf des Lichtleiters 18 orientiert ist, in einer Schrägansicht. Der Verlauf des Lichtleiters 18 entspricht einer mittleren Lichtausbreitungsrichtung L von Licht der Lichtquelle 16 im Lichtleiter 18. Der Verlauf ist hier ein im Raum gekrümmter Verlauf. Der Lichtleiter 18 weist in seinem Rückseitenbereich 22 seiner Grenzfläche eine Folge von Umlenkelementen 24 auf. Jedes Umlenkelement weist eine Reflexionsfläche 28 auf. Die Umlenkelemente 24 sind in der z-Richtung bevorzugt nur 0,5 mm bis 2 mm breit.

In der x-Richtung erweitert sich der Querschnitt des Lichtleiters bevorzugt kontinuierlich auf eine Breite seines Lichtaustrittsflächenbereichs 26. Dadurch wird der Öffnungswinkel des im Lichtleiter 18 in der x-z-Ebene propagierenden Lichtes verringert. Der Lichtaustrittsflächenbereich 26 weist bevorzugt die dargestellte konvexe Form auf. Der Lichtaustrittsflächenbereich 26 bildet mit seiner konvexen Form eine Oberfläche einer Sammellinse. Deren Brennweite ist bevorzugt so auf den Abstand der Prismenrippe vom Lichtaustrittsflächenbereich und die Breite der Prismenrippe (d.h. der Breite der Umlenkelemente) in z-Richtung abgestimmt, dass diese Breite für einen Betrachter optisch auf die Breite des Lichtaustrittsflächenbereichs 26 vergrößert wird. Dies trägt zu einer in der Breite des Lichtaustrittsflächenbereichs 26 erwünscht homogenen Leuchtdichte bei.

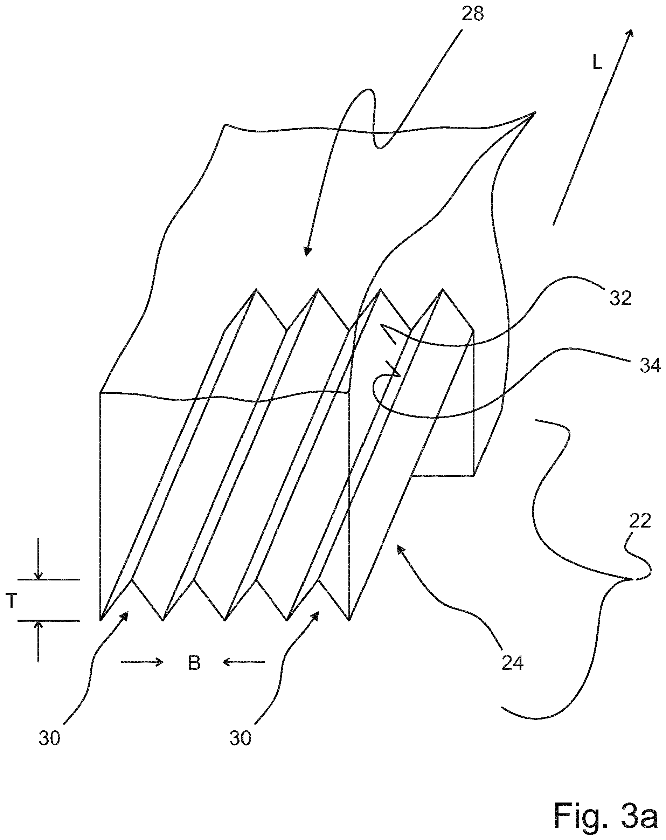

Die Figur 3a zeigt eine Schrägansicht einer Reflexionsfläche 28 eines Umlenkelements. Die Figuren 1 bis 3a ergeben zusammen ein Ausführungsbeispiel einer erfindungsgemäßen Beleuchtungseinrichtung.

Der Rückseitenbereich 22 weist Längsrillen 30 auf, die in den Reflexionsflächen 28 liegend längs der mittleren Lichtausbreitungsrichtung L ausgerichtet sind.

Die dadurch bedingte und oben genannte verbesserte Ausleuchtung des Lichtaustrittsflächenbereichs 26 des Lichtleiters 18 ergibt sich dadurch, dass die Begrenzungsflächen 32, 34 der Längsrillen 30 auf sie auftreffendes Licht auch in Richtung der Breite (z-Richtung) des langgestreckten Lichtleiters 18 streuen, wodurch vor dem Auftreffen auf diese Begrenzungsflächen 32, 34 bestehende Inhomogenitäten in der Leuchtdichte des auf diese Begrenzungsflächen 32, 34 auftreffenden Lichtes verwaschen werden.

Bei dem in der Fig. 3a dargestellten Ausführungsbeispiel ist eine Einhüllende einer Reflexionsfläche 28 von jeweils einem Umlenkelement 24 eine ebene Fläche. Diese Ausgestaltung zeichnet sich durch eine einfache Realisierbarkeit aus. Die Längsrillen 30 haben bevorzugt keinen Einfluss auf die Einhüllende und damit auf die übrige äußere Form des Querschnitts und den Verlauf des Lichtleiters.

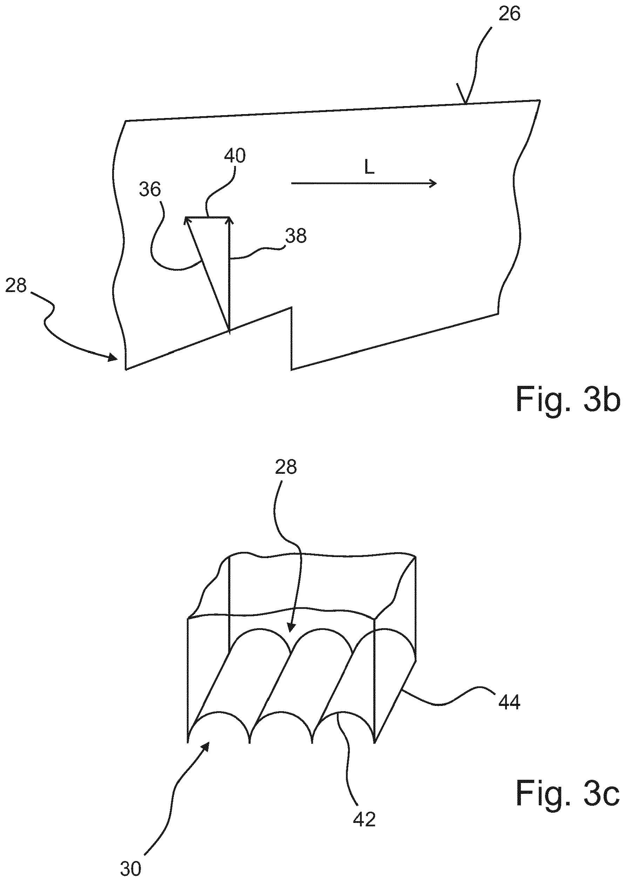

Figur 3b zeigt eine Reflexionsfläche 28 eines Umlenkelements 24 von der Seite (quer zur Hauptlichtausbreitungrichtung L), Das Umlenkelement 24 besitzt eine Flächennormale 36 seiner Reflexionsfläche 28, die eine zum Lichtaustrittsflächenbereich 26 weisende Komponente 38 und eine entgegengesetzt zur mittleren Lichtausbreitungsrichtung L weisende Komponente 40 aufweist. Durch diese Merkmale bewirken die Reflexionsflächen 28 die erwünschte Umlenkung von auf sie einfallendem Licht zum Lichtaustrittsflächenbereich 26, die dieses Licht dort austreten lässt.

Figur 3a zeigt eine Ausgestaltung, bei der die Längsrillen 30 durch ebene Begrenzungsflächen 32, 34 begrenzt werden. Diese ebenen Begrenzungsflächen 32, 34 bewirken eine gleichmäßige Streuung der auf diese Begrenzungsflächen 32, 34 einfallenden Lichtstrahlen der Lichtquelle 16 in quer zur mittleren Lichtausbreitungsrichtung L liegenden Richtungen (z-Richtung).

Figur 3c zeigt eine weitere bevorzugte Ausgestaltung, bei der die Längsrillen 30 durch gekrümmte Flächen begrenzt werden. Gekrümmte Flächen haben den Vorteil, dass bereits eine einzelne Fläche aus gleicher Richtung auf verschiedene Punkte der Fläche einfallende Lichtstrahlen in verschiedene Richtungen reflektiert, was eine gute Durchmischung der Richtungen der reflektierten Strahlen in quer zur mittleren Lichtausbreitungsrichtung L liegenden Richtungen begünstigt.

Bevorzugt ist auch, dass die Längsrillen durch Zylinderflächen begrenzt werden. Dabei bildet ein Rand eines quer zur Längsrichtung der Längsrillen liegenden Querschnitts eine Leitkurve 42 und eine die Leitkurve entlang geführte Gerade 44 definiert die Fläche der Längsrille 30. Durch die Gestaltung der Leitkurve 42 lassen sich beim Entwurf des Lichtleiters 18 viele verschiedene Längsrillenformen vorgeben, mit denen die Richtungen der Streuung in quer zur mittleren Lichtausbreitungsrichtung l liegenden Richtungen definiert eingestellt werden kann.

Weiter ist bevorzugt, dass die Längsrillen in einer quer zur Längsrichtung der Längsrillen liegenden Richtung 1/10 mm bis maximal 3/10 mm breit sind (Breite B in Figur 3a). Eine weitere bevorzugte Ausgestaltung zeichnet sich dadurch aus, dass die Längsrillen 1/10 mm bis 3/10 tief sind (Tiefe T in Figur 3a). Es hat sich gezeigt, dass diese Abmessungen einerseits bereits ausreichen, um eine gewünschte Streuwirkung in quer zur mittleren Lichtausbreitungsrichtung L liegenden Richtungen zu erzielen, und andererseits aber noch klein genug sind, um vom Betrachter nicht als gesonderte Struktur im Erscheinungsbild des Lichtleiters wahrgenommen zu werden.

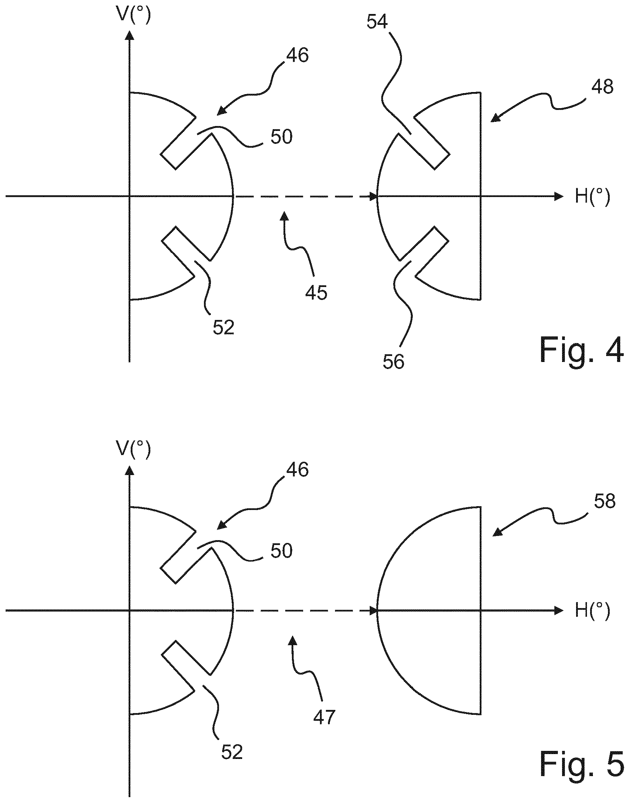

Figur 4 zeigt richtungsabhängige Anteile von Lichtverteilungen vor und nach der Reflexion 45 an einer ebenen Reflexionsfläche eines Umlenkelements, das keine Längsrillen aufweist. Der linke Teil der Figur 4 gibt schematisch eine Lichtverteilung 46 von Richtungskomponenten von im Lichtleiter propagierendem Licht in Richtung einer Vertikalachse V (entspricht der z-Richtung in den vorhergehenden Figuren) und in Richtung einer Horizontalachse H (entspricht der y-Richtung in den vorhergehenden Figuren) vor einer Reflexion an einer ebenen Reflexionsfläche an. Eine solche Verteilung von Richtungskomponenten ist selbst eine Lichtverteilung.

Der rechte Teil der Figur 4 gibt schematisch eine Lichtverteilung 48 von Richtungskomponenten von im Lichtleiter propagierendem Licht in Richtung der Vertikalachse V (entspricht der z-Richtung in den vorhergehenden Figuren) und in Richtung der Horizontalachse H (entspricht der y-Richtung in den vorhergehenden Figuren) nach einer Reflexion 45 an einer ebenen Reflexionsfläche an. Eine solche Verteilung von Richtungskomponenten ist selbst eine Lichtverteilung.

Die schematisch dargestellten Inhomogenitäten 50, 52, 54, 56 repräsentieren Richtungen, in denen kein Licht propagiert. Diese Inhomogenitäten 50, 52, 54, 56 stellen unerwünschte Inhomogenitäten der Lichtverteilungen und damit der Leuchtdichte dar.

Ein Vergleich beider Lichtverteilungen 46, 48 zeigt, dass die im rechten Teil der Figur 4 dargestellte Lichtverteilung des von der ebenen Reflexionsfläche reflektierten Lichtes bis auf eine Spiegelung an der Vertikalachse V mit der im linken Teil der Figur 4 dargestellten auf die Reflexionsfläche einfallenden Lichtverteilung identisch ist. Das bedeutet insbesondere, dass die Inhomogenitäten 50, 52, 54, 56 der Lichtverteilung 46 des auf die ebene Reflexionsfläche einfallenden Lichtes spiegelbildlich auch in der Lichtverteilung 48 des von der Reflexionsfläche reflektierten Lichtes enthalten sind. Durch die ebene Reflexionsfläche wird das einfallende Licht spiegelnd (Einfallswinkel gleich Ausfallswinkel) umgelenkt. Die Inhomogenitäten 54, 56 zeichnen sich in diesem Fall in der Leuchtdichte auf dem Lichtaustrittsflächenbereich des Lichtleiters ab.

Figur 5 zeigt schematisch Lichtverteilungen 46, 58, wie sie mit einem Längsrillen 30 in den Reflexionsflächen 28 von Umlenkelementen 24 aufweisenden Lichtleiters eines Ausführungsbeispiels einer erfindungsgemäßen Beleuchtungseinrichtung erzeugt werden. Der linke Teil der Figur 5 gibt schematisch eine Lichtverteilung 46 von Richtungskomponenten von im Lichtleiter propagierendem Licht in Richtung einer Vertikalachse V (entspricht der z-Richtung in den vorhergehenden Figuren) und in Richtung einer Horizontalachse H (entspricht der y-Richtung in den vorhergehenden Figuren) vor einer Reflexion 47 an einer Längsrillen aufweisenden Reflexionsfläche an.

Der rechte Teil der Figur 5 gibt schematisch eine Lichtverteilung 58 von Richtungskomponenten von im Lichtleiter propagierendem Licht in Richtung der Vertikalachse V (entspricht der z-Richtung in den vorhergehenden Figuren) und in Richtung der Horizontalachse H (entspricht der y-Richtung in den vorhergehenden Figuren) nach einer Reflexion an einer Längsrillen 30 aufweisenden Reflexionsfläche 28 an.

Die schematisch dargestellten Inhomogenitäten 50, 52 in der Lichtverteilung 46 repräsentieren auch hier Richtungen, in denen kein Licht propagiert. Diese Inhomogenitäten stellen unerwünschte Inhomogenitäten der Lichtverteilung 46 und damit der Leuchtdichte dar.

Durch die Längsrillen 30 wird die Reflexionsfläche 28 des Umlenkelements 24 in eine Vielzahl von Teilflächen in Form von Begrenzungsflächen, bspw. ebenen Begrenzungsflächen 32, 34 zerlegt. Die Begrenzungsflächen 32, 34, können von Teilfläche zu Teilfläche unterschiedlich gerichtete Flächennormalen aufweisen, wobei die Flächennormalen innerhalb einer Begrenzungsfläche gleich sind. Dies ist dann der Fall, wenn die Teilflächen ebene Flächen sind. Alternativ können sie auch an verschiedenen Punkten innerhalb einer Teilfläche verschieden gerichtete Flächennormalen aufweisen. Dies ist bei gekrümmten Teilflächen der Fall. Durch die an verschiedenen Punkten der Reflexionsfläche verschiedenen Flächennormalen werden auf Grund des Reflexionsgesetzes auch aus ein und derselben Richtung einfallende Lichtstrahlen in voneinander verschiedene Richtungen reflektiert. Durch die erfindungsgemäßen Längsrillen ergibt sich damit eine richtungszerstreuende Wirkung in Form einer zusätzlichen vertikalen Streuung. Durch diese zusätzliche vertikale Streuung wird die Lichtverteilung des reflektierten Lichtes homogenisiert und in vertikaler Richtung leicht aufgeweitet.

Ein Vergleich beider Lichtverteilungen der Figur 5 zeigt, dass die im rechten Teil der Figur 5 dargestellte Lichtverteilung 58 des von der Längsrillen 30 aufweisenden Reflexionsfläche 28 reflektierten Lichtes nicht mit der im linken Teil der Figur 5 dargestellten auf die Reflexionsfläche 28 einfallenden Lichtverteilung 46 identisch ist. Der Vergleich zeigt insbesondere, dass die Inhomogenitäten 50, 52 der Lichtverteilung 46 des auf die Längsrillen aufweisende Reflexionsfläche einfallenden Lichtes in der Lichtverteilung 58 des von der Reflexionsfläche reflektierten Lichtes nicht mehr enthalten sind. Als Folge zeichnen sich auch keine Inhomogenitäten der Leuchtdichte auf den Lichtaustrittsflächenbereich des Lichtleiters 18 ab.

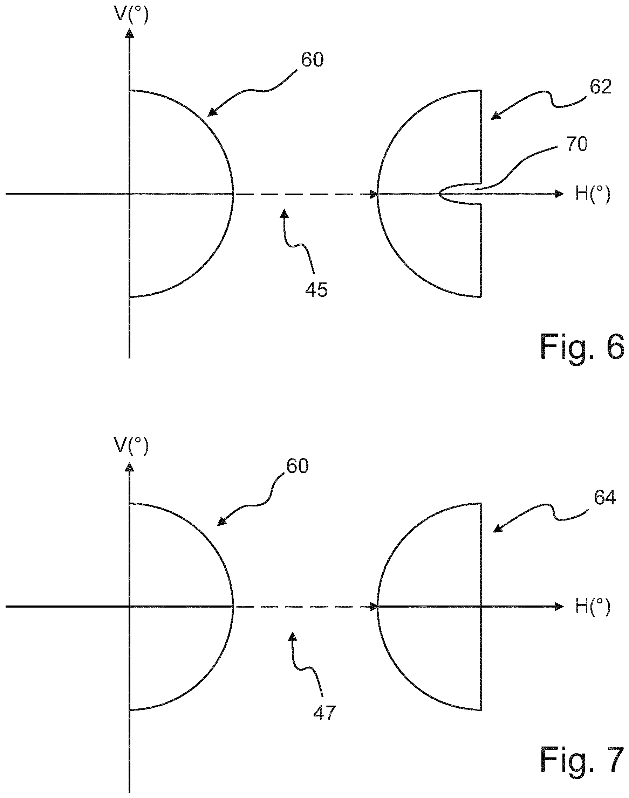

Figur 6 zeigt Beispiele weiterer Lichtverteilungen 60, 62, 64 vor und nach der Reflexion 45 an einer ebenen Reflexionsfläche eines Umlenkelements, das keine Längsrillen aufweist. Der linke Teil der Figur 6 gibt schematisch eine Verteilung von Richtungskomponenten von im Lichtleiter propagierendem Licht in Richtung einer Vertikalachse V (entspricht der z-Richtung in den vorhergehenden Figuren) und in Richtung einer Horizontalachse H (entspricht der y-Richtung in den vorhergehenden Figuren) vor einer Reflexion 45 an einer ebenen Reflexionsfläche an.

Der rechte Teil der Figur 6 gibt schematisch eine Verteilung 62 von Richtungskomponenten von im Lichtleiter propagierendem Licht in Richtung der Vertikalachse V (entspricht der z-Richtung in den vorhergehenden Figuren) und in Richtung der Horizontalachse H (entspricht der y-Richtung in den vorhergehenden Figuren) nach einer Reflexion 45 an einer ebenen Reflexionsfläche an.

Im Unterschied zu den linken Teilen der Figuren 4 und 5 ist die im linken Teil der Figur 6 schematisch dargestellte Lichtverteilung bereits homogen. Ein Vergleich beider Lichtverteilungen der Figur 6 zeigt, dass die im rechten Teil der Figur 6 dargestellte Lichtverteilung des von der ebenen Reflexionsfläche reflektierten Lichtes einen zentralen dunklen Bereich 70 aufweist. Ein solcher zentraler dunkler Bereich 70 kann dadurch bedingt sein, dass Teilstrahlen der auf die ebene Reflexionsfläche eines Umlenkelements einfallenden Lichtverteilung, deren Richtung nur wenig von der Horizontalrichtung abweichen, dort keine interne Totalreflexion erfahren, sondern dort aus dem Lichtleiter austreten und somit für die zu erzeugende Lichtverteilung verloren gehen. Im Ergebnis kann dies zu wahrnehmbar dunklen Bereichen auf dem Lichtaustrittsflächenbereich des Lichtleiters führen.

Figur 7 zeigt schematisch Lichtverteilungen 60, 64, wie sie mit einem Längsrillen in den Reflexionsflächen von Umlenkelementen aufweisenden Lichtleiters eines Ausführungsbeispiels einer erfindungsgemäßen Beleuchtungseinrichtung erzeugt werden. Der linke Teil der Figur 7 entspricht dem linken Teil der Figur 6 und gibt schematisch eine Verteilung von Richtungskomponenten von im Lichtleiter propagierendem Licht in Richtung einer Vertikalachse V (entspricht der z-Richtung in den vorhergehenden Figuren) und in Richtung einer Horizontalachse H (entspricht der y-Richtung in den vorhergehenden Figuren) vor einer Reflexion 47 an einer Längsrillen aufweisenden Reflexionsfläche an.

Der rechte Teil der Figur 7 gibt schematisch eine Verteilung von Richtungskomponenten von im Lichtleiter propagierendem Licht in Richtung der Vertikalachse V (entspricht der z-Richtung in den vorhergehenden Figuren) und in Richtung der Horizontalachse H (entspricht der y-Richtung in den vorhergehenden Figuren) nach einer Reflexion 47 an einer Längsrillen aufweisenden Reflexionsfläche an. Durch die erfindungsgemäß vorgesehenen Längsrillen kann der im rechten Teil der Figur 6 dargestellte unerwünschte Effekt der nahe an der horizontalen Achse auftretenden Inhomogenität in Form des zentralen dunklen Bereichs 70 vermieden werden. Die Längsrillen sorgen für eine zusätzliche Streuung in der Vertikalrichtung. Als erwünschte Folge fällt auch hier Streulicht auch auf die sonst dunklen Bereiche des Lichtaustrittsflächenbereichs, was dazu führt, dass die sonst dunklen Bereiche hell erscheinen.

## Patentansprüche

1. Kraftfahrzeugbeleuchtungseinrichtung (10) mit einem von einer Grenzfläche ummantelten und eine langgestreckte Form aufweisenden Lichtleiter (18) und einer Licht (20) in den Lichtleiter (18) einspeisenden Lichtquelle (16), wobei der Lichtleiter (18) dazu eingerichtet ist, das eingespeiste Licht (20) durch an seiner Grenzfläche erfolgende interne Totalreflexionen in seinem Inneren weiterzuleiten, wobei sich eine der langgestreckten Form folgende mittlere Lichtausbreitungsrichtung (L) ergibt, und wobei die Grenzfläche einen konvexen Lichtaustrittsflächenbereich (26) und einen Rückseitenbereich (22) aufweist, der als eine Prismenrippe angeordnete Umlenkelemente (24) mit Reflexionsflächen (28) aufweist, die durch ihre Form und Anordnung dazu eingerichtet sind, auf sie einfallendes Licht (20) der Lichtquelle (16) so steil zum Lichtaustrittsflächenbereich (26) umzulenken, dass es dort aus dem Lichtleiter (18) austritt, wobei der Lichtaustrittsflächenbereich (26) mit seiner konvexen Form eine Oberfläche einer Sammellinse bildet, **dadurch gekennzeichnet, dass** der Rückseitenbereiche (22) des Lichtleiters in einem quer zur mittleren Lichtausbreitungsrichtung (L) liegenden Querschnitt schmaler ist als der Lichtaustrittsflächenbereich (26), dass der Rückseitenbereich (22) Längsrillen (30) aufweist, die längs der mittleren Lichtausbreitungsrichtung (L) in den Reflexionsflächen (28) liegend ausgerichtet sind und dass die Brennweite der Sammellinse so auf den Abstand der Prismenrippe vom Lichtaustrittsflächenbereich 2- (26) und eine erste Breite der Umlenkelemente der Prismenrippe abgestimmt ist, dass die erste Breite der Umlenkelemente der Prismenrippe für einen Betrachter optisch auf eine zweite Breite des Lichtaustrittsflächenbereichs (26) vergrößert wird, wobei die erste Breite und die zweite Breite in einer jeweiligen Richtung orientier sind, welche zur mittleren Lichtausbreitungsrichtung (L) und zu einer vom Rückseitenbereich (22) zum Lichtaustrittsflächenbereich (26) weisenden Richtung quer liegt.

2. Beleuchtungseinrichtung (10) nach Anspruch 1, **dadurch gekennzeichnet, dass** eine Einhüllende einer Reflexionsfläche (28) von jeweils einem Umlenkelement (24) eine ebene Fläche ist.

3. Beleuchtungseinrichtung (10) nach Anspruch 1 oder 2, **dadurch gekennzeichnet, dass** die Reflexionsflächen (28) der Umlenkelemente (24) eine Flächennormale (36) besitzen, die eine zum Lichtaustrittsflächenbereich (26) weisende Komponente (38) und eine entgegengesetzt zur mittleren Lichtausbreitungsrichtung (L) weisende Komponente (40) aufweist.

4. Beleuchtungseinrichtung (10) nach einem der vorhergehenden Ansprüche, **dadurch gekennzeichnet, dass** die Längsrillen (30) durch ebene Flächen (32, 34) begrenzt werden.

5. Beleuchtungseinrichtung (10) nach einem der Ansprüche 1 bis 3, **dadurch gekennzeichnet, dass** die Längsrillen (30) durch gekrümmte Flächen begrenzt werden.

6. Beleuchtungseinrichtung (10) nach Anspruch 4 oder 5, **dadurch gekennzeichnet, dass** die Längsrillen (30) durch Zylinderflächen begrenzt werden.

7. Beleuchtungseinrichtung (10) nach einem der vorhergehenden Ansprüche, **dadurch gekennzeichnet, dass** die Längsrillen (30) in einer quer zur Längsrichtung der Längsrillen (30) liegenden Richtung 1/10 mm bis 3/10 mm breit sind.

8. Beleuchtungseinrichtung (10) nach einem der vorhergehenden Ansprüche, **dadurch gekennzeichnet, dass** die Längsrillen (30) 1/10 mm bis 3/10 tief sind.

9. Beleuchtungseinrichtung (10) nach einem der vorhergehenden Ansprüche, **dadurch gekennzeichnet, dass** der Rückseitenbereich (22) in der Richtung, die zur mittleren Lichtausbreitungsrichtung (L) und zu einer vom Rückseitenbereich (22) zum Lichtaustrittsflächenbereich (26) weisenden Richtung quer liegt, eine Breite von 0,5 mm bis 2 mm aufweist.

## Claims

1. Motor vehicle lighting device (10) comprising a light guide (18) surrounded by an interface and having an elongate shape, and a light source (16) which feeds light (20) into the light guide (18), the light guide (18) being designed to forward the fed-in light (20) in its interior by total internal reflections occurring at its interface, a central light propagation direction (L) that follows the elongate shape being formed, and the interface having a convex light exit surface region (26) and a rear-side region (22) which has deflection elements (24) which are arranged in the manner of a prismatic rib, comprise reflection surfaces (28) and, on account of their shape and arrangement, are designed to deflect light (20) from the light source (16) that is incident thereon at such a steep angle relative to the light exit surface region (26) that said light exits the light guide (18) at said region, the light exit surface region (26) forming, with its convex shape, a surface of a converging lens, **characterized in that** the rear-side region (22) of the light guide is narrower than the light exit surface region (26) in a cross section transverse to the central light propagation direction (L), **in that** the rear-side region (22) has longitudinal grooves (30) that are aligned along the central light propagation direction (L) in the reflection surfaces (28), and **in that** the focal length of the converging lens is matched to the distance of the prismatic rib from the light exit surface region (26) and a first width of the deflection elements of the prismatic rib such that, for an observer, the first width of the deflection elements of the prismatic rib is optically enlarged to a second width of the light exit surface region (26), the first width and the second width each being oriented in a direction which is transverse to the central light propagation direction (L) and to a direction which points from the rear-side region (22) toward the light exit surface region (26).

2. Lighting device (10) according to claim 1, **characterized in that** an envelope of a reflection surface (28) of each deflection element (24) is a flat surface.

3. Lighting device (10) according to either claim 1 or claim 2, **characterized in that** the reflection surfaces (28) of the deflection elements (24) have a surface normal (36) which has a component (38) which points toward the light exit surface region (26) and a component (40) which points in the opposite direction to the central light propagation direction (L).

4. Lighting device (10) according to any of the preceding claims, **characterized in that** the longitudinal grooves (30) are delimited by flat surfaces (32, 34).

5. Lighting device (10) according to any of claims 1 to 3, **characterized in that** the longitudinal grooves (30) are delimited by curved surfaces.

6. Lighting device (10) according to either claim 4 or claim 5, **characterized in that** the longitudinal grooves (30) are delimited by cylindrical surfaces.

7. Lighting device (10) according to any of the preceding claims, **characterized in that** the longitudinal grooves (30) are 1/10 mm to 3/10 mm wide in a direction transverse to the longitudinal direction of the longitudinal grooves (30).

8. Lighting device (10) according to any of the preceding claims, **characterized in that** the longitudinal grooves (30) are 1/10 mm to 3/10 mm deep.

9. Lighting device (10) according to any of the preceding claims, **characterized in that** the rear-side region (22) has a width of 0.5 mm to 2 mm in the direction which is transverse to the central light propagation direction (L) and to a direction which points from the rear-side region (22) toward the light exit surface region (26).

## Revendications

1. Dispositif d'éclairage de véhicule automobile (10) comprenant un guide de lumière (18) entouré par une interface et ayant une forme allongée, et une source de lumière (16) injectant de la lumière (20) dans le guide de lumière (18), le guide de lumière (18) étant conçu pour transférer la lumière injectée (20) par des réflexions totales internes successives par son interface, une direction de propagation de lumière moyenne (L) suivant la forme allongée étant obtenue, et l'interface comprenant une zone de surface de sortie de lumière convexe (26) et une zone de face arrière (22) qui comprend des éléments de déviation (24) agencés sous la forme d'une nervure prismatique comprenant des surfaces de réflexion (28) qui, par leur forme et leur agencement, sont conçues pour dévier de la lumière (20) arrivant de la source de lumière (16) vers la zone de surface de sortie de lumière (26) de manière si raide qu'elle y sorte du guide de lumière (18), la zone de surface de sortie de lumière (26) avec sa forme convexe formant une surface supérieure d'une lentille convergente, **caractérisé en ce que** la zone de face arrière (22) du guide de lumière est plus étroite dans une section transversale, qui est transversale par rapport à la direction de propagation de lumière moyenne (L) que la zone de surface de sortie de lumière (26), **en ce que** la zone de face arrière (22) comprend des rainures longitudinales (30) qui sont orientées dans les surfaces de réflexion (28) le long de la direction de propagation de lumière moyenne (L), et **en ce que** la distance focale de la lentille convergente est adaptée à la distance de la nervure prismatique de la zone de surface de sortie de lumière (26) et une première largeur des éléments de déviation de la nervure prismatique de telle sorte que la première largeur des éléments de déviation de la nervure prismatique soit augmentée optiquement, pour un observateur, jusqu'à une seconde largeur de la zone de surface de sortie de lumière (26), la première largeur et la seconde largeur étant orientées dans une direction respective qui est transversale à la direction de propagation de lumière moyenne (L) et à une direction allant de la zone de face arrière (22) vers la zone de surface de sortie de lumière (26).

2. Dispositif d'éclairage (10) selon la revendication 1, **caractérisé en ce qu'**une enveloppe d'une surface de réflexion (28) d'un élément de déviation (24) respectif est une surface plane.

3. Dispositif d'éclairage (10) selon la revendication 1 ou 2, **caractérisé en ce que** les surfaces de réflexion (28) des éléments de déviation (24) possèdent une normale à sa surface (36), qui comprend une composante (38) orientée vers la zone de surface de sortie de lumière (26) et une composante (40) orientée à l'opposé de la direction de propagation de lumière moyenne (L).

4. Dispositif d'éclairage (10) selon l'une quelconque des revendications précédentes, **caractérisé en ce que** les rainures longitudinales (30) sont délimitées par des surfaces planes (34).

5. Dispositif d'éclairage (10) selon l'une quelconque des revendications 1 à 3, **caractérisé en ce que** les rainures longitudinales (30) sont délimitées par des surfaces incurvées.

6. Dispositif d'éclairage (10) selon la revendication 4 ou 5, **caractérisé en ce que** les rainures longitudinales (30) sont délimitées par des surfaces cylindriques.

7. Dispositif d'éclairage (10) selon l'une quelconque des revendications précédentes, **caractérisé en ce que** les rainures longitudinales (30) ont une largeur de 1/10 mm à 3/10 mm dans une direction transversale à la direction longitudinale des rainures longitudinales (30).

8. Dispositif d'éclairage (10) selon l'une quelconque des revendications précédentes, **caractérisé en ce que** les rainures longitudinales (30) ont une profondeur de 1/10 mm à 3/10 mm.

9. Dispositif d'éclairage (10) selon l'une quelconque des revendications précédentes, **caractérisé en ce que** la zone de face arrière (22) a une largeur de 0,5 mm à 2 mm dans une direction transversale à la direction de propagation de lumière moyenne (L) et à une direction allant de la zone de face arrière (22) vers la zone de surface de sortie de lumière (26).
